# EUROPEAN PATENT SPECIFICATION

(11) **EP 1 717 116 B1**
(45) Date of publication and mention of the grant of the patent: **19.05.2010**
(21) Application number: 06006396.3
(22) Date of filing: 28.03.2006
(51) Int. Cl.: B60R 25/04, F02N 11/02

(54) **Control system, control method and computer program product for a vehicle**
Steuervorrichtung, Steuerverfahren und Computerprogramm für ein Fahrzeug
Système de contrôle, procédé de contrôle et programme computer pour un véhicule

(30) Priority: 20.04.2005 JP 2005122362; 27.04.2005 JP 2005129334
(43) Date of publication of application: 02.11.2006
(73) Proprietor: Mazda Motor Corporation, Aki-gun, Hiroshima 730-8670 (JP)
(72) Inventor: Inada, Takahiro, Aki-gun, Hiroshima 730-8670 (JP); Hamada, Yasushi, Aki-gun, Hiroshima 730-8670 (JP)
(74) Representative: Müller-Boré & Partner Patentanwälte

(56) References cited:
- EP-A1- 1 416 142
- EP-A2- 1 346 888

## Description

The present invention relates to a control system, a control method and a computer program product for a vehicle that comprises both an idling stop start system and a smart engine starter system.

Conventionally, a vehicle with the idling stop start system, which aims at improving a fuel economy, reducing an exhaust emission, suppressing vibrations and noises and so forth, is known. For example, Japanese Patent Laid-Open Publication No. 10-299531 discloses the vehicle in which the engine is automatically stopped (idling stop) when the driver steps off the clutch pedal at the zero-vehicle speed and then the engine is restarted (idling start) when the clutch pedal is pressed on again. Further, it is also known that the engine is automatically started in a case where a specified emergency start is required, for example, when a vehicle's battery capacity decreases below a specified capacity during the engine stop. Likewise, it is known that the engine is automatically started for an emergency start when a vehicle's brake boost decreases below a specified brake boost during the engine stop.

Meanwhile, a vehicle with the smart engine starter system that aims at a vehicle antitheft is known. For example, Japanese Patent Laid-Open Publication No. 2003-269019 discloses the vehicle in which the wireless-signal communication is conducted between the onboard device and the portable device and the engine's start is granted when ID code verification through this communication is confirmed.

Herein, the vehicle equipped with the above-described both systems, the idling stop start system and the smart engine starter system, have the following problems. Hereinafter, the idling stop start system is referred to as "ISS," and the smart engine starter system is referred to as "SES." For example, there would occur a case where while the engine is stopped according to the ISS system in a parking lot or somewhere, the passenger misunderstands that the engine has been stopped because of the engine stop operation being conducted by the passenger and then leaves the vehicle carrying the portable device. In this case, any person not carrying the portable device could get on the vehicle and conduct operation for the vehicle start. Thereby, the vehicle theft might occur. In order to prevent this situation, the confirmation of ID verification may be required when the engine is started according to the ISS system, like the engine start according to the SES system.

Meanwhile, there would occur a problem that the engine start according to the emergency start of the ISS system is not conducted properly. Namely, for example, while the engine is stopped according to the ISS system in the parking lot or somewhere, the passenger is having a rest with some electric devises operating, such as an air conditioner and/or an audio device. In this case, if the battery capacity decreases improperly, the ISS system is going to conduct the emergency start of the engine. Herein, if there happens any problems with the ID verification with the portable device, the engine would be properly started and thereby the battery would go dead (discharged). The above-described problems of the ID verification with the portable device may be caused by some circumstances of the vehicle stopped (e.g., the wireless-signal communication between the onboard device and the portable device may be disturbed by electromagnetic noises generated from a broadcasting station located nearby), location of the portable device in the vehicle (e.g., the signal (request signal) from the onboard device may not reach properly the portable device that is placed in a bag, deteriorating proper communications between the onboard device and the portable device), the capacity of a battery of the portable device (e.g., the intensity of ID signal from the portable device with the low battery capacity may becomes too weak to have proper communications between them), or the like. Likewise, in the case where the brake boost decreases improperly, instead of the battery capacity, in the same situations described above, the engine may not be started properly, so that a pressing force required to step on the brake pedal that is required right after the vehicle start would become relatively heavy.

EP-A1-1 416 142 discloses an engine control using an electronic key system. The control device comprises a programmable controller programmed to control the operating device to execute an idle stop which stops the engine under a predetermined stop condition, and control the operating device to restart the engine during the idle stop when any of a plurality of restart conditions are satisfied. The restart conditions are including a restart request from a driver of the vehicle. The controller is further programmed to determine whether or not the engine is in the idle stop, determine whether or not a restart condition is satisfied which does not correspond to a restart request from the driver during an idle stop, control the identification device to verify the identification code of the electronic key when a restart condition is satisfied which does not correspond to the restart request from the driver during the idle stop, and prohibit the operating device from restarting the engine when the identification device has failed in verifying the identification code.

EP-A2-1 346 888 discloses a wireless device for a vehicle which is provided with a portable transmitter and receiver unit having a transponder and a keyless circuitry, and an on-vehicle transmitter and receiver device having antennas and a controller adapted to communicate with the portable transmitter and receiver unit through the antennas and operative to transmit an identifier request signal to the portable transmitter and receiver unit while requesting the portable transmitter and receiver unit to transmit back an identifier signal for checking whether an ID code of the portable transmitter and receiver unit is proper. At least one of the antennas of the on-vehicle transmitter and receiver device is mounted at a terminal end of an instrument panel of the vehicle.

The present invention has been devised in view of the above-described problems, and an object of the present invention is to provide a control system for a vehicle that can provide a proper antitheft function of the SES system and a proper engine-start function of the ISS system.

According to the present invention, a control system for a vehicle having the features according to claim 1, a control method for a vehicle having the features of claim 7, and a computer readable medium having the features of claim 8 are provided. Preferred embodiments of the invention are disclosed in the respective dependent claims.

This object is solved by the control system for a vehicle according to the present invention of claim 1, by a control method for a vehicle according to claim 11 and by a computer program product according to claim 12. Preferred embodiments of the present invention are subject of the dependent claims.

According to the present invention, there is provided a control system for a vehicle, comprising a smart engine starter control device, in which a start of an engine of the vehicle is granted when ID verification with a portable device operative to exchange preferably wireless signals is confirmed in a case where an operation for an engine start is conducted by a passenger, and an idling stop start control device, in which the engine is automatically stopped when the vehicle is stopped and automatically started in a case where an operation for a vehicle start is conducted by the passenger or a specified (predetermined or predeterminable) emergency start is required, wherein the idling stop start control device is configured such that in the case where the operation for the vehicle start is conducted by the passenger, the engine is automatically started at least when the ID verification with the portable device is confirmed, and in the case where the specified (predetermined or predeterminable) emergency start is required, the engine is automatically started without the confirmation of the ID verification with the portable device or on a condition of the confirmation of the ID verification along with a specified (predetermined or predeterminable) control to enhance a function of the ID verification.

Thereby, according to the vehicle equipped with both ISS system and SES system, the engine's start according to the vehicle start operation by the passenger is executed when the ID verification with the portable device is confirmed. Accordingly, even if any persons who do not carry the portable device get on the vehicle and try to move the vehicle while the passenger carrying the portable device is out and away from the vehicle, the engine start is prohibited, thereby securing the antitheft function of the SES system properly.

Meanwhile, the engine's start according to the emergency start requirement of the battery capacity decrease or the brake boost decrease is executed without the confirmation of the ID verification with the portable device or on the condition of the confirmation of the ID verification along with the specified (predetermined or predeterminable) control to enhance the function of the ID verification. Accordingly, even if there would occur any problems with the verification by the portable device, the proper engine start can be maintained, thereby securing the engine start function of the ISS system properly and avoiding the battery discharge or the heavy brake operation at the engine start.

Herein, in the case where the engine is automatically started on the condition of the confirmation of the ID verification along with the specified (predetermined or predeterminable) control to enhance the function of the ID verification, this specified (predetermined or predeterminable) control to enhance the function of the ID verification comprises at least one of a signal-intensity increase control and a signal-threshold decrease control for the exchanged wireless signals of the portable device. Thereby, the engine's start according to the emergency start requirement is also executed with the confirmation of the ID verification with the portable device. Thereby, the antitheft function of the SES system can be strengthened further, and the control to enhance the ID verification function can be properly attained.

According to an embodiment of the present invention, where the engine is automatically started without the confirmation of the ID verification with the portable device, the idling stop start control device is configured such that after the engine is automatically started according to the requirement of the specified (predetermined or predeterminable) emergency start and in the case where the operation for the vehicle start is conducted by the passenger, the vehicle is prohibited from starting when the ID verification with the portable device is not confirmed.

Thereby, after the engine is automatically started according to the emergency start requirement and when the operation for the vehicle start is conducted by the passenger, the vehicle is prohibited from starting when the ID verification with the portable device is not confirmed. Accordingly, it can be prevented that any persons not carrying the portable device starts the vehicle after the emergency start requirement is met (the battery capacity decrease, the brake boost decrease, etc.), thereby securing the antitheft function of the vehicle.

According to another embodiment of the present invention, where the engine is automatically started without the confirmation of the ID verification with the portable device, the idling stop start control device is configured such that after the engine is automatically started according to the requirement of the specified (predetermined or predeterminable) emergency start and when ID verification with the portable device is not confirmed, a specified (predetermined or predeterminable) alarm or display is conducted.

Thereby, after the engine is automatically started according to the emergency start requirement and when the ID verification with the portable device is not confirmed, the specified (predetermined or predeterminable) alarm is conducted. Accordingly, the passenger can be notified in advance of a situation where the vehicle may be prohibited from starting even if the vehicle start operation is conducted by the passenger while the ID verification with the portable device is not confirmed. Thereby, the passenger can be prevented properly from getting upset in or surprised with a situation where the engine has already started but the vehicle could not start (move) despite the vehicle start operation by the passenger.

Additionally, the above-described alarm becomes a warning that could urge any persons not carrying the portable device to leave the vehicle without trying the vehicle theft, or that could request the passenger carrying the portable device to remove any possible causes of the non-confirmation of the ID verification (such as, changing the position of the portable device, or replacing its battery by a new one).

According to another embodiment of the present invention, where the engine is automatically started without the confirmation of the ID verification with the portable device, there is further provided at least one passenger detecting device to detect an existence of the passenger in the vehicle, and the idling stop start control device is configured such that the engine start according to the requirement of the specified (predetermined or predeterminable) emergency start is restricted when the passenger's existence is not detected by the passenger detecting device.

Thereby, when the passenger's existence in the vehicle is not detected by the passenger detecting device, the engine staring is restricted, so that the engine can be prevented from being started automatically when passenger's existence is not detected after the passenger carrying the portable device gets off the vehicle. Thus, the antitheft function can be improved.

According to another embodiment of the present invention, where the engine is automatically started without the confirmation of the ID verification with the portable device, the idling stop start control device is configured such that an operation of an onboard electric device is restricted when the engine start is restricted.

Thereby, since the operation of the onboard electric device is restricted when the engine start is restricted, the battery discharge can be avoided in advance.

According to another embodiment of the present invention, where the engine is automatically started without the confirmation of the ID verification with the portable device, the idling stop start control device is configured such that when the passenger's existence is not detected by the passenger detecting device, the engine start is granted on a condition of the confirmation of the ID verification with the portable device.

Thereby, when the passenger's existence in the vehicle is not detected by the passenger detecting device, the engine start is granted on the condition of the confirmation of the ID verification with the portable device. Namely, even if any malfunctions or detecting mistakes would happen to the passenger detecting device, a situation where the engine can not be started with the vehicle start operation by the passenger during, for example, a vehicle stop for waiting for the light changed, can be prevented from happening. Also, even if any malfunctions or detecting mistakes would happen to the passenger detecting device and thereby the passenger's existence in the vehicle is not detected, the engine start is granted as long as the ID verification with the portable device is confirmed. Thereby, the battery discharge can be prevented properly, thereby securing the operation of the onboard electric devices, and the brake boost can be prevented from decreasing inappropriately. Herein, since the ID verification has been already confirmed, the grant of engine start would not cause the vehicle-theft problem.

According to another embodiment of the present invention, where the engine is automatically started without the confirmation of the ID verification with the portable device, there is further provided a restriction cancel device to cancel restrictions of the engine start and the onboard-electric-device operation, which is to be operated by the passenger.

Thereby, since there is provided the cancel switch to cancel restrictions of the engine start and the onboard-electric-device operation by the control unit, the engine can be operated by the passenger operating this cancel switch. Thereby, even in a case, for example, where the passenger goes out of the vehicle and the onboard electric devices, such as the audio device, some equipments connected to cigar-lighter outlet via a cable, are used for a long period of time, the operation of these devices can be attained properly with the function of the cancel switch and thus the utility of the vehicle can be improved.

According to the invention, there is further provided a control method for a vehicle, in particular for use with a control system according to the invention or a preferred embodiment thereof, comprising the following steps:
an engine starter control step granting a start of an engine of the vehicle when ID verification with a portable device operative to exchange particularly wireless signals is confirmed in a case where an operation for an engine start is conducted by a passenger; and
an idling stop start control step automatically stopping the engine when the vehicle is stopped and automatically starting the engine in a case where an operation for a vehicle start is conducted by the passenger or a specified (predetermined or predeterminable) emergency start is required,
wherein in said idling stop start control step in the case where the operation for the vehicle start is conducted by the passenger, the engine is automatically started at least when the ID verification with the portable device is confirmed, and in the case where the specified (predetermined or predeterminable) emergency start is required, the engine is automatically started without the confirmation of the ID verification with the portable device or on a condition of the confirmation of the ID verification along with a specified (predetermined or predeterminable) control to enhance a function of the ID verification.

According to the invention, there is further provided a computer program product comprising computer-readable instructions, in particular stored on a computer-readable storage medium, which when loaded and executed on a suitable system perform a control method for a vehicle according to the invention or a preferred embodiment thereof.

Other features, aspects, and advantages of the present invention will become apparent from the following description which refers to the accompanying drawings.
FIG. **1** is a perspective view showing major parts of a vehicle according to an embodiment of the present invention.
FIG. **2** is a control system diagram of the vehicle.
FIG. **3** is a plan view showing detecting areas of signal outside-transmitting antennas of the vehicle.
FIG. **4** is a plan view showing detecting areas of signal inside-transmitting antennas of the vehicle.
FIG. **5** is a plan view showing enlarged detecting areas of the signal outside-transmitting antennas of the vehicle.
FIG. **6** is an explanatory diagram of an operation of SES system of the vehicle.
FIG. **7** is flowcharts of respective control operations of a control unit and a portable device of the vehicle.
FIG. **8** is a flowchart of an exemplified specific operation of an idling stop start control of the vehicle.
FIG. **9** is a flowchart following the flowchart in FIG. **8****.**
FIG. **10** is a flowchart following the flowchart in FIG. **9****.**
FIG. **11** is a flowchart of another exemplified specific operation of the idling stop start control of the vehicle, corresponding to FIG. **10****.**
FIG. **12** is a flowchart of further another exemplified specific operation of the idling stop start control of the vehicle.
FIG. **13** is a flowchart following the flowchart in FIG. **12**.

Hereinafter, preferred embodiments of the present invention will be described referring to the accompanying drawings. It should be understood that even though embodiments are separately described, single features thereof may be combined to additional embodiments.

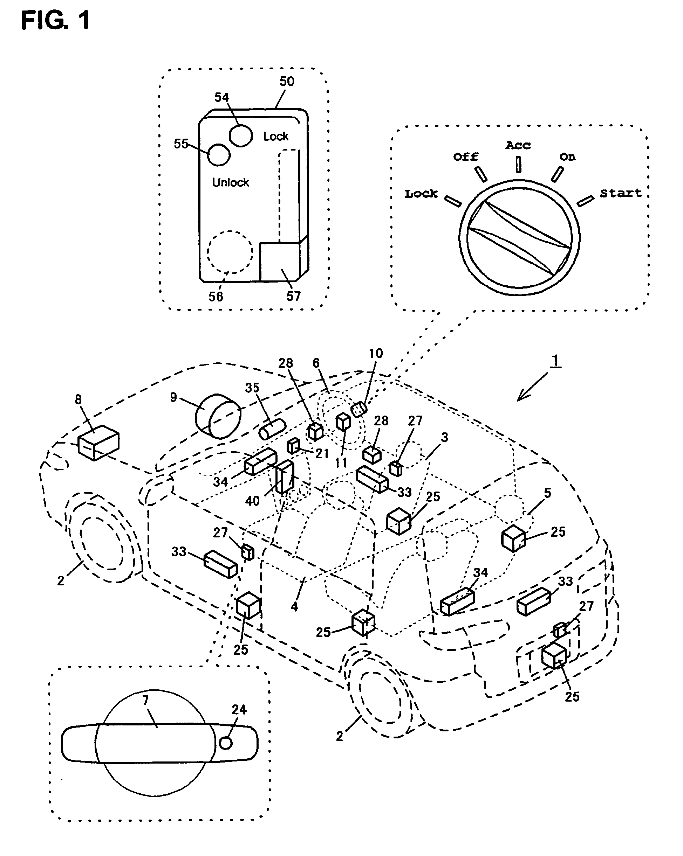

In the embodiments, the present invention is exemplarily adopted or embodied in a vehicle **1** shown in FIG. **1****.** The vehicle **1** is equipped with an idling stop start (ISS) system that can improve a fuel economy and the like, and a smart engine starter (SES) system that can prevent a vehicle theft and the like. It has an ignition operational portion **10** that is provided in front of or close to a driver's seat **3**. The ignition operational portion **10,** as shown in FIG. **1****,** is selectable in a steering lock position (Lock), a steering lock cancel portion (Off), an accessory ON position (Acc), an ignition ON position (On), and an ignition start position (Start), respectively, and it can be pushed or operated preferably in its rotational axis direction. A steering wheel handle **6** is prevented from rotating with a mechanical lock by a steering lock mechanism **11** in the steering lock position. While, its rotation is free without the lock operation of the steering lock mechanism **11** in the steering lock cancel position. When a passenger tries to start an engine (not illustrated) for a vehicle start, the ignition operational portion **10** is positioned in the steering lock position (Lock), with its operation, particularly rotation prevented or inactive. It should be understood that the ignition operational portion **10** may be embodied in the form of an "Engine Start" button to be operated by the driver, which may be active or inactive (e.g. the pushing of the "Engine Start" button in the inactive state does not start any action) depending on the control signal(s) of a control unit **40** to be described in the following.

The vehicle **1** is equipped with a control unit **40** as an onboard signal transmission device (onboard device), which functions as a control unit for the ISS control and SEE control. The control unit **40** exchanges (preferably wireless) signals with a portable signal device (portable device) **50.** There are provided signal outside-transmitting antennas **33...33** at or close to a driver's seat door, an assistant's seat door and/or a rear hatch, and signal inside-transmitting antennas **34, 34** at a front and/or a rear in the vehicle **1,** which respectively transmit request signals from the onboard device **40.** Meanwhile, there is provided a signal receiving antenna **35** at or close to the front in the vehicle **1,** which receives ID signal (a response signal including ID code that is peculiar (own) to each potable device **50**) from the portable device **50.** Further, there is provided a cancel switch **21** to cancel a restriction of the idling start by the control unit **40** at or close to the front in the vehicle (corresponding to a preferred "restriction cancel device"). Also, at outer knobs **7...7** of the driver's seat door, assistant's seat door and/or rear hatch (only the outer knob of the assistant's seat door is illustrated in FIG. **1****)** are provided door request switches **24...24** to be operated with pushing by a passenger located outside the vehicle **1,** and door lock actuators **25...25** are provided near the driver's seat door, assistant's seat door and/or rear hatch. Furthermore, at a meter unit disposed in front of or close to the driver's seat **3** is provided a warning indicator such as a warning lamp and/or buzzer **28** to alarm or notify the passenger in the vehicle **1.**

Herein, the above-described control unit **40** corresponds to at least a part of a preferred "smart engine starter control device" and/or of a preferred "idling stop start control device".

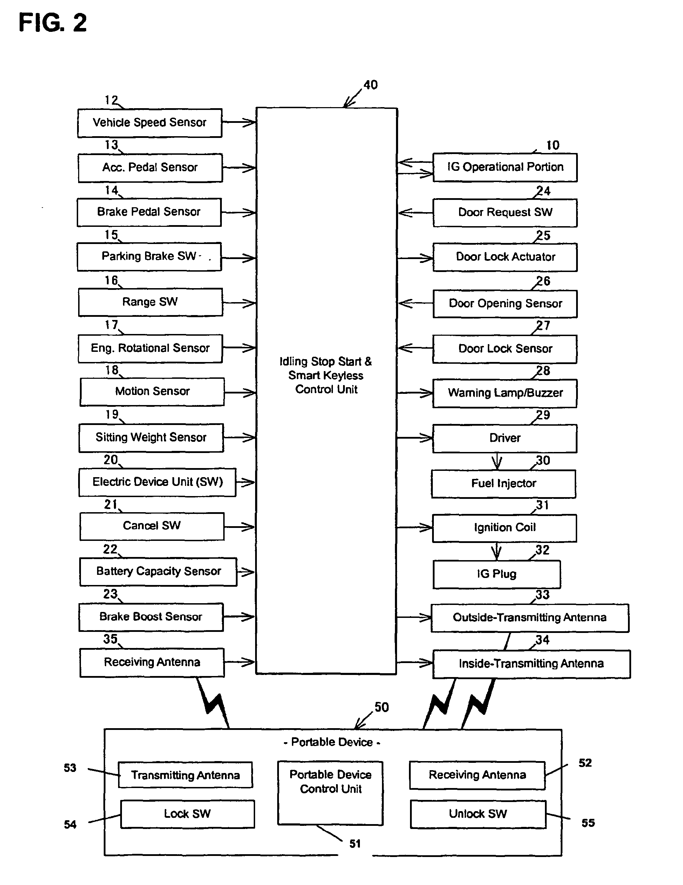

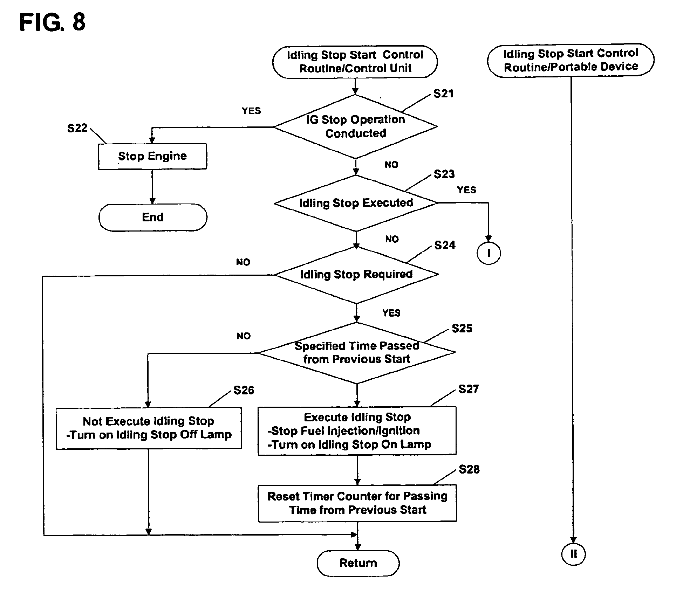

As shown in FIG. **2****,** the control unit **40** receives information data particularly from one or more of the following: the ignition operational portion **10,** a vehicle speed sensor **12,** an accelerator pedal sensor **13** to detect pressing of an accelerator pedal, a brake pedal sensor **14** to detect a brake pedal, a parking brake switch **15** to turn ON according to an operation of the parking brake, a range switch **16** to detect a range selected position of the shift lever, an engine rotational sensor **17,** a motion sensor **18** to detect a motion of the passenger preferably by using a CCD camera, an infrared-rays sensor etc., which is provided at an upper portion in the vehicle, a sitting-weight detecting sensor **19** to detect a passenger's sitting weight for determining operation of an airbag operation, an electric-device unit **20** equipped with switches of respective electric devices such as air conditioner, audio, which is provided at a console between the driver's seat and the assistant's seat, the above-described cancel switch **21,** a battery sensor **22** to detect a capacity of a battery **8** (see FIG. **8**), a brake boost sensor **23** to detect a boost in a brake booster **9** (see FIG. **1**), a door request switch **24,** a door opening detecting sensor **26** to detect an open state of the driver's seat door, assistant's seat door, rear seat door and/or rear hatch (this sensor may be particularly comprised of a window opening detecting sensor to detect an open state of others such as windows of the vehicle **1,** a courtesy-lamp switch, or the like), a door lock detecting sensor **27** to detect a lock state of the doors of the driver's seat door, assistant's seat door, rear seat door and/or rear hatch (this sensor may be particularly comprised of a window opening detecting sensor to detect a closed state of others such as windows of the vehicle **1**), the above-described signal receiving antenna **35** and the like. The control unit **40** outputs one or more control signals respectively to one or more of the following: the ignition operational portion **10,** the door lock actuators **25,** the warning lamp and buzzer **28,** a driver **29** of fuel injectors **30,** an ignition coil **31** of ignition plugs **32,** the signal outside-transmitting antennas **33** and the signal inside-transmitting antennas **34.**

Herein, the above-described motion sensor **18,** sitting-weight detecting sensor **19,** electric-device unit **20,** and/or door opening detecting sensor **26** correspond to at least part of a preferred "passenger detecting device".

Meanwhile, the portable device **50** which the passenger carries comprises a portable-device control unit **51,** a signal receiving antenna **52,** a signal transmitting antenna **53,** a lock switch **54,** and/or an unlock switch **55.** The portable-device control unit **51** preferably receives information data from the signal receiving antenna **52,** lock switch **54** and unlock switch **55,** and preferably outputs a control signal to the signal transmitting antenna **53,** thereby receiving a request signal from the onboard device **40** and transmitting ID signal to the onboard device **40.** The portable device **50** particularly is equipped with a battery **56** and an emergency key **57** for a system failsafe as shown in FIG. **1****.**

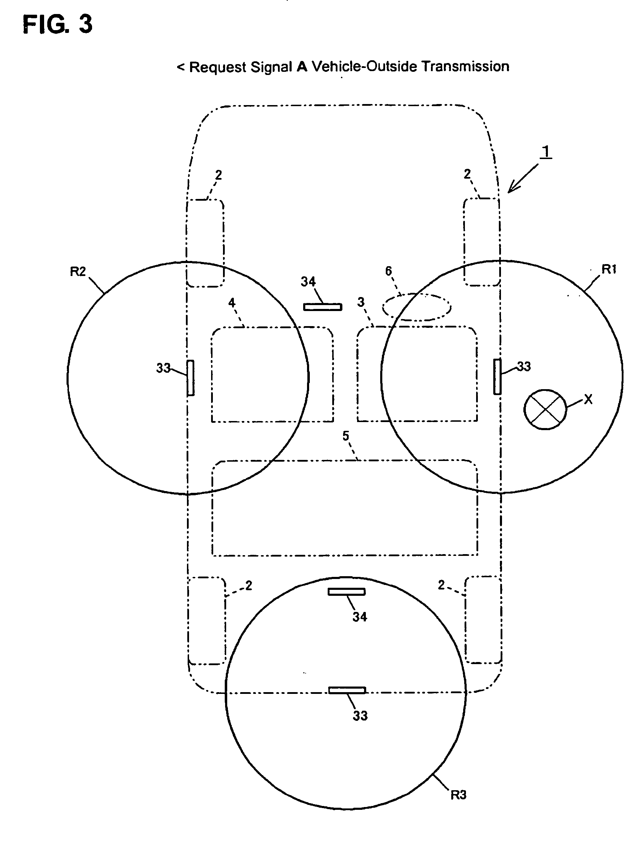

As shown in FIG. **3****,** when the request signal **A** is transmitted from the signal outside-transmitting antenna **33...33,** detecting areas **R1, R2** and **R3** which are reached by the request signal **A** are formed near the driver's seat door, assistant's seat door and/or rear hatch. Herein, when it is detected that the portable device **50** is within either one of these detecting areas **R1, R2** and **R3,** the control unit **40** determines that the passenger **X** with the portable device **50** is located outside the vehicle. FIG. **3** shows that the passenger **X** is detected in the detecting area **R1** near the driver's seat door. Herein, vehicle wheels **2...2**, driver's seat **3,** assistant's seat **4,** rear seat **5** and steering wheel or handle **6** are illustrated together to show locations of the antennas **33...33** and the areas **R1, R2** and **R3.**

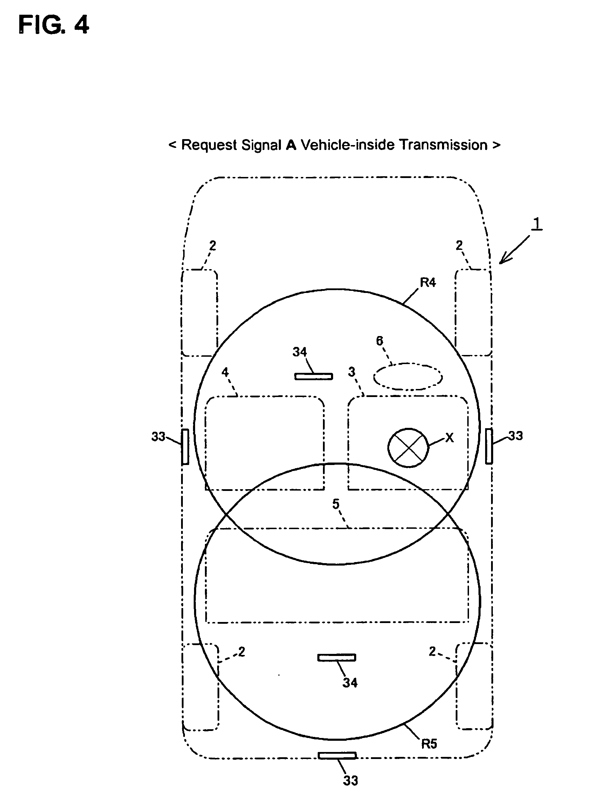

Also, as shown in FIG. **4****,** when the request signal **A** is transmitted from the signal inside-transmitting antenna **34...34**, detecting areas **R4** and **R5** which are reached by the request signal **A** are formed at front and rear portions inside the vehicle, respectively. Likewise, when the portable device **50** is detected to be within either one of these detecting areas **R4** and **R5,** the control unit **40** determines that the passenger **X** with the portable device **50** is located inside the vehicle. FIG. **4** shows that the passenger **X** is detected to be seated in the driver's seat 3 in the detecting area **R4.** Likewise, the vehicle wheels **2...2,** driver's seat **3,** assistant's seat **4,** rear seat **5** and steering handle **6** are illustrated together to show locations of the antennas **34...34** and the areas **R4** and **R5**.

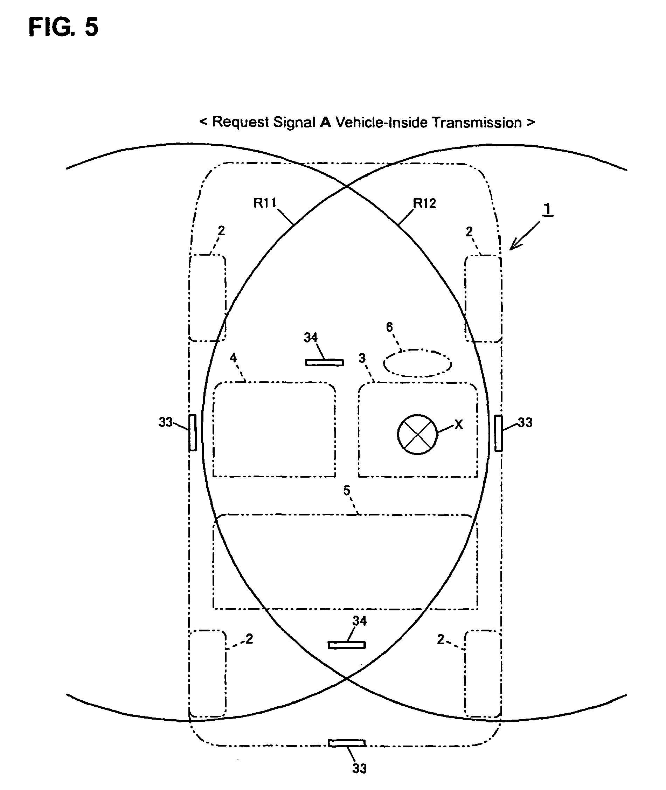

Further, as shown in FIG. **5****,** the signal outside-transmitting antenna **33...33** at the driver's seat door and the assistant's seat door may be configured so as to have enlarged detecting areas **R11, R12,** so that an overlap area of these detecting areas **R11, R12** can cover most part of, preferably substantially almost a whole area inside the vehicle. When the portable device **50** is detected to be within this overlap area, the control unit **40** determines that the passenger **X** with the portable device **50** is located inside the vehicle **1.**

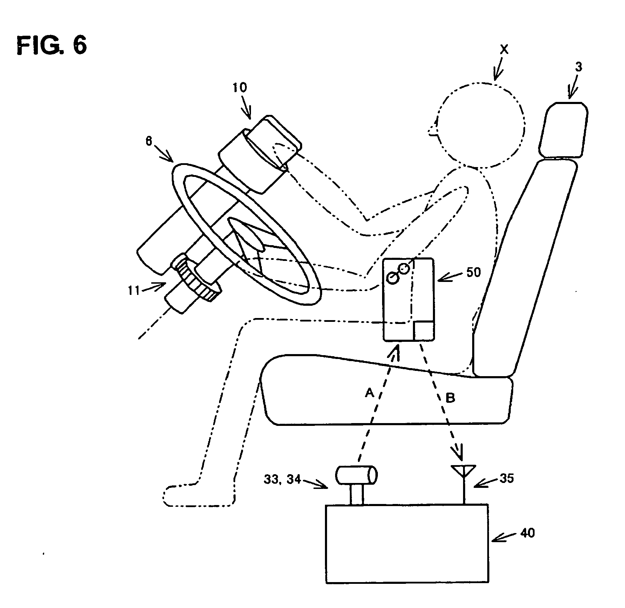

Next, the operation of smart engine starter (SES) system of the vehicle **1,** i.e., the operation at the engine start by the passenger, will be described referring to FIG. **6****.** As described above, the ignition operational portion **10 preferably** is positioned in or near the steering lock position (Lock) at the engine start, with its rotation locked. First, the passenger **X** pushes the ignition operational portion **10.** The control device **40** transmits the request signal **A** via the antennas **33, 34** in response to the pushing operation. The portable device **50** carried by the passenger **X** receives this request signal **A** and then transmits the ID signal **B** including its own ID code. The control unit **40** receives the ID signal **B** via the receiving antenna **35,** and then verifies the received ID code, particularly determines whether or not this received ID code is identical or corresponds to the regular ID code (ID verification is conducted). When these codes are identical or correspond to each other (ID verification is confirmed), the control unit **40** grants the rotational operation of the ignition operational portion **10.** Thus, when the passenger **X** rotates the ignition operational portion **10** to the steering lock cancel position (Off), where the steering lock mechanism **11** gets disabled and the rotation of the steering handle **6** is granted. In other words, after the confirmation of the ID verification an operation of the ignition operational portion **10** is permitted, thereby disabling the steering lock mechanism **11** and allowing a rotation of the steering wheel **6.**

Subsequently, when the passenger **X** operated, particularly rotates the ignition operational portion **10** to the ignition start position (Start) (the engine start operation), the control unit **40** transmits the request signal **A** again via the antennas **33, 34.** The portable device **50** carried by the passenger **X** receives this request signal **A** and then transmits the ID signal **B** preferably including its own ID code again. When the control unit **40** receives the ID signal **B** via the receiving antenna **35** and determines again whether or not this received ID code is identical or corresponds to the regular ID code (ID verification is conducted). When these codes are identical (ID verification is confirmed), the engine start is granted (the engine start control).

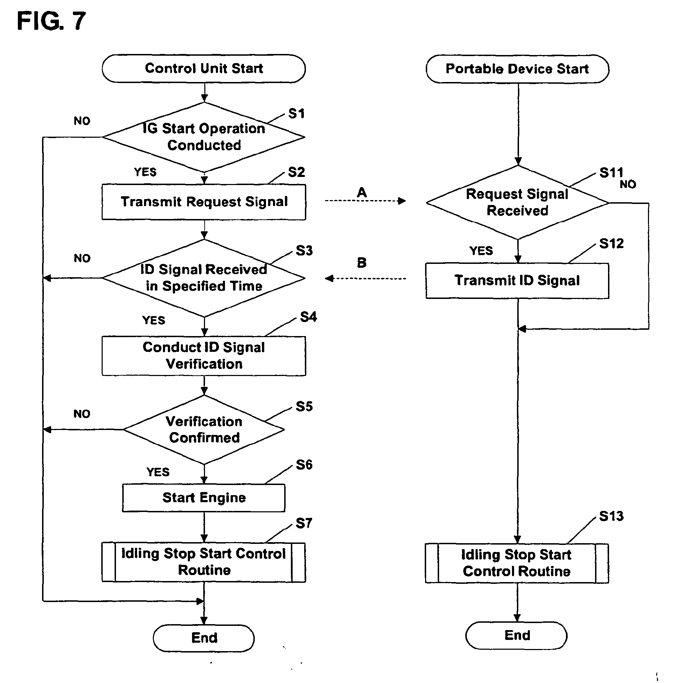

Next, exemplified more specific operations of the control unit **40** of the vehicle **1** and the portable device **50** will be described referring to flowcharts in FIG. **7** and other following figures.

First, in step **S1** in FIG. **7**, the control unit **40** determines whether IG operation is conducted or not, i.e., the ignition operational portion **10** is operated or rotated to the ignition start position (Start) or not. When it is determined that the IG operation is conducted, the request signal **A** is transmitted in step **S2**. The portable device **50** determines whether it receives the request signal **A** or not in step **S11.** When receiving, it transmits the ID signal **B** preferably including its own ID code in step **S12.** Then, the control sequence proceeds to an idling stop start control routine of step **S13.**

Meanwhile, the control unit **40** determines in step **S3** whether it receives the above-described ID signal **B** within a specified (predetermined or predeterminable) period of time or not. When it is YES, the verification of the ID signal **B** is conducted, e.g., whether or not the received ID code is identical or corresponds to the regular ID code is determined in step **S4**. Then, it is determined whether the verification of the ID signal **B** is confirmed or not in step **S5**. When it is confirmed, the engine is started in step **S6**. After this, the control sequence proceeds to the idling stop start control routine of step **S7.**

Although the verification of the ID signal **B** is conducted in the step **S4** at the time when the ignition operational portion **10** is operated, particularly rotated to the ignition start position (Start) in the above-described control, the following control may be adopted. Namely, this verification of the ID signal **B** is conducted at the time (1) when the ignition operational portion **10** is operated, particularly rotated from the steering lock cancel position (Off) to the accessory ON position (Acc), (2) when the ignition operational portion **10** is operated, particularly rotated from the accessory ON position (Acc) to the ignition ON position (On), (3) when a specified (predetermined or predeterminable) period of time (e.g., about 3 seconds) has passed while the ignition operational portion 10 is in the accessory ON position (Acc), (4) when a specified (predetermined or predeterminable) period of time (e.g., about 60 seconds) has passed while the ignition operational portion 10 is in the ignition ON position (On), (5) when any door is opened from the state where all doors are in closed position, or (6) when all doors are closed from the state where any door is in opened position.

Next, the idling start stop control routine of the steps **S7, S13** in FIG. **7** will be described referring to flowcharts in FIG. **8** and other figures.

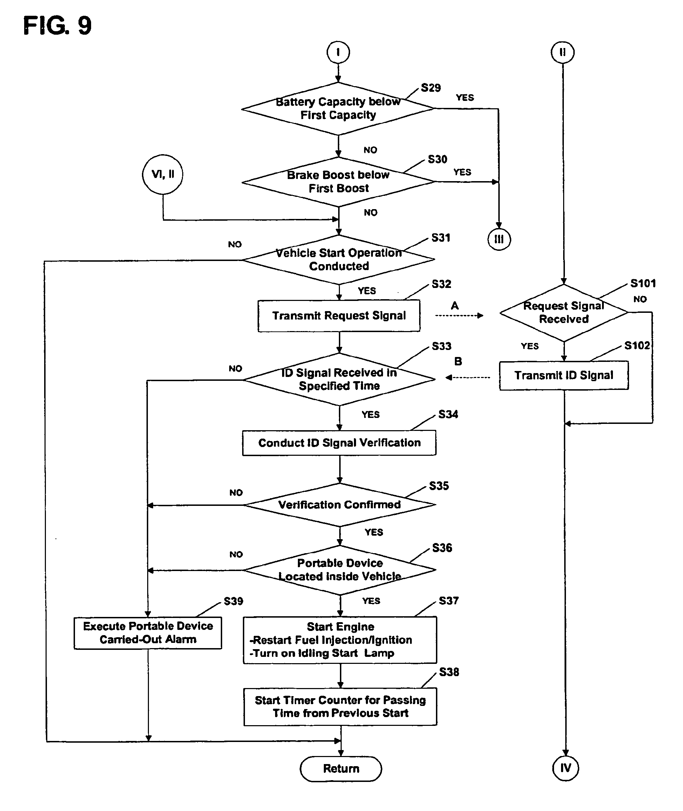

First, the control unit **40** determines whether an IG stop operation is conducted or not in step **S21** in FIG. **8****.** When it is determined that the IG stop operation is conducted, the engine is stopped in step **S22** and the control sequence ends. When it is determined that the IG stop operation is not conduced, it is determined whether the idling stop is under execution or not in step **S23**. When the idling stop is under execution, the control sequence proceeds to step **S29** in FIG. **9**. When the idling stop is not under execution, it is determined in step **S24** whether requirement for idling stop is met or not.

Herein, the above-described requirement(s) for idling stop is/are, for example, such that the vehicle stops for a specified (predetermined or predeterminable) period of time, the parking brake is under operation, the shift lever is positioned at non-driving ranges such as P or N ranges, and/or the like.

When the requirement(s) for idling stop is/are met in the step **S24**, it is determined in step **S25** whether the time that has passed from the previous engine start exceeds a specified (predetermined or predeterminable) time or not. When it does not exceed, the idling stop is not executed in step **S26**. In this case, an idling stop off is indicated, e.g. an idling stop off lamp is turned on, which alarms the passenger about this state. Then, the control sequence returns to the step **S21.** Meanwhile, when it exceeds, the idling stop is executed in step **S27**. In this case, an idling stop on is indicated, e.g. an idling stop operation lamp is turned on, which alarms the passenger about this state. Then, a timer counter for the time passing from the previous engine start is reset in step **S28**, and the control sequence returns to the step **S21.**

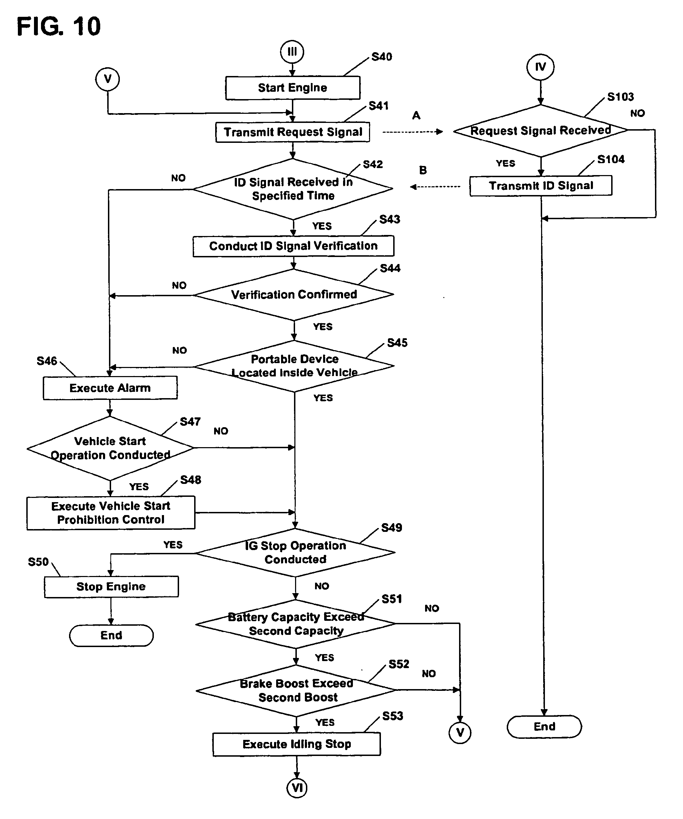

Also, the control unit **40** determines in step **S29** in FIG. **9** whether a battery capacity decreases below a first (predetermined or predeterminable) capacity or not. When it decreases, the control sequence proceeds to step **S40** in FIG. **10****.** When it does not decrease, the control sequence proceeds to step **S30**, where it is determined whether a brake boost decreases below a first (predetermined or predeterminable) boost or not. When the brake boost decreases, the control sequence proceeds to the step **S40** in FIG. 10. When it does not decrease, the control sequence proceeds to step **S31,** where it is determined whether or not an operation for a vehicle start is conducted by the passenger.

Herein, the above-described vehicle start operation(s) is/are, for example, such that the accelerator pedal is operated, the parking brake is released, the shift lever is positioned at driving ranges such as D or R ranges, and/or the like.

When it is determined in the step **S31** that the vehicle start operation is conducted, the request signal A is transmitted in step **S32**. It is determined in step **S101** whether the portable device **50** receives the request signal **A** or not. When it receives, the portable device **50** transmits the ID signal **B** preferably including its own ID code in step **S102.**

The control unit 40 determines in step **S33** whether it receives the above-described ID signal **B** within a specified (predetermined or predeterminable) period of time or not. When it is YES, the verification of ID signal **B** is conducted in step **S34.** Then, it is determined whether the verification of the ID signal **B** is confirmed or not in step **S35.** When it is confirmed, it is determined whether the portable device **50** is located inside the vehicle or not in step **S36**. When it is located inside, the engine is started in step **S37**. Also, the timer counter for the time passing from the previous engine start is started in step **S38,** and the control sequence returns to the step **S21.** When the answer in the steps **S33, S35** or **S36** is NO, an alarm of the portable device **50** carried out is executed in step **S39.**

The control unit **40** starts the engine in step **S40** in FIG. **10****,** and subsequently transmits the request signal **A** in step **S41.** The portable device **50** determines whether it receives this request signal **A** or not in step **S103.** When it receives, the portable device **50** transmits the ID signal **B** preferably including its own ID code in step **S104.**

The control unit **40** determines in step **S42** whether it receives the above-described ID signal **B** within a specified (predetermined or predeterminable) period of time or not. When it is YES, the verification of ID signal **B** is conducted in step **S43.** Then, it is determined whether the verification of the ID signal **B** is confirmed in step **S44.** When it is confirmed, it is determined whether the portable device **50** is located inside the vehicle or not in step **S45**. When it is located inside, the control sequence proceeds to step **S49**. When the answer in the steps **S42, S44** or **S45** is NO, an alarm is executed in step **S46**. Then, it is determined in step **S47** whether the vehicle start operation is conducted or not. When the vehicle start operation is not conducted, the control sequence proceeds to the step **S49**. When the vehicle start operation is conducted, a vehicle start prohibition control is executed in step **S48,** and after that the control sequence proceeds to the step **S49.**

Herein, the above-described vehicle start prohibition control(s) is/are, for example, control(s) of an engine stop, a shift change prohibition (shift lock), a cancel prohibition of brake and/or parking brake and/or the like.

Then, it is determined in step **S49** whether the IG stop operation is conducted or not. When it is determined that the IG stop operation is conducted, the engine is stopped in step **S50** and the control sequence ends. When it is determined that the IG stop operation is not conducted, it is determined in step **S51** whether the battery capacity exceeds a second (predetermined or predeterminable) capacity or not (the second capacity preferably has a greater value than the first capacity in the step **S29**). When it does not exceed that, the control sequence returns to the step **S41**. When it exceeds that, it is determined in step **S52** whether the brake boost exceeds a second (predetermined or predeterminable) boost or not (the second brake boost preferably has a greater value than the first bake boost in the step **S30**). When it does not exceeds that, the control sequence returns to the step **S41.** When it exceeds that, an idling stop is executed in step **S53**, and after that the control sequence returns to the step **S31** in FIG. **9****.**

As described above, according to the vehicle **1** equipped with both ISS system and SES system of the present embodiment, the engine's start (step **S37**) according to the vehicle start operation by the passenger **X** (step **S31**) preferably is executed when the ID verification with the portable device **50** is confirmed (step **S35**). Accordingly, even if any persons who do not carry the portable device **50** get on the vehicle and try to move the vehicle **1** while the passenger **X** carrying the portable device **50** is out, the engine start is prohibited, thereby improving the antitheft function of the SES system.

Meanwhile, the engine's start (step **S40**) according to the emergency start requirement of the battery capacity decrease (step **S29**) and/or the brake boost decrease (step **S30**) is executed without the confirmation of the ID verification with the portable device **50.** Accordingly, even if there occurs any problems with the verification by the portable device **50,** the engine can be started properly, thereby securing the engine start function of the ISS system properly and avoiding the battery discharge and/or the heavy brake operation at the engine start.

Also, after the engine is automatically started according to the emergency start requirement (step **S40**) and when the operation for the vehicle start is conducted by the passenger **X** (step **S47**), the vehicle **1** is prohibited from starting (step **S48**) when the ID verification with the portable device **50** is not confirmed (step **S44**). Accordingly, it can be prevented that any person not carrying the portable device 50 starts the vehicle **1** after the emergency start requirement(s) is/are met (the battery capacity decrease, the brake boost decrease, etc.), thereby improving the antitheft function of the vehicle.

Further, after the engine is automatically started according to the emergency start requirement (step **S40**) and when the ID verification with the portable device **50** is not confirmed (step **S44**), the specified (predetermined or predeterminable) alarm is conducted (step **S46**). Accordingly, the passenger **X** can be notified (preferably in advance) of a situation where the vehicle **1** is or may be prohibited from starting (step **S48**) even if the vehicle start operation is conducted by the passenger **X** (step **S47**) while the ID verification with the portable device **50** is not confirmed (step **S44**). Thereby, the passenger **X** could be prevented from getting upset or surprised with the situation that the engine had already started but the vehicle **1** could not start (move) despite the vehicle start operation by the passenger **X**.

Additionally, the above-described indication or alarm (step **S46**) becomes a warning that could urge any persons not carrying the portable device **50** to leave the vehicle **1** without trying a vehicle theft, or that could request the passenger **X** carrying the portable device **50** to remove any possible causes of the non-confirmation of the ID verification (such as, changing position of the portable device **50** or replacing its battery 56 by a new one).

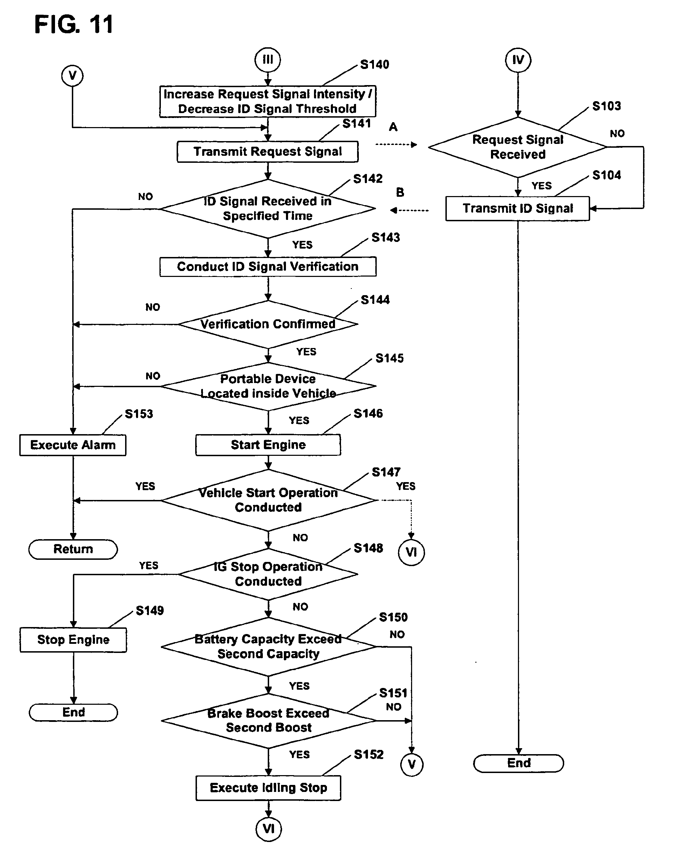

Next, a second preferred embodiment of the idling stop start control routine of the steps **S7, S13** in FIG. **7** will be described referring to a flowchart in FIG. **11****.** As compared with FIGS. **8 - 10****,** only a portion that corresponds to FIG. **10** is different from the previous embodiment. Accordingly, this difference will be described below.

When it is determined that the battery capacity decreases below the first (predetermined or predeterminable) capacity in the step **S29** and/or the brake boost decreases below the first (predetermined or predeterminable) boost in step **S30**, the intensity of the request signal **A** preferably is increased and/or the threshold of the ID signal **B** is decreased in step **S140.** Namely, a control to enhance a function of the ID verification of the portable device **50** is executed. Then, the request signal **A** is transmitted in step **S141.** It is determined in step **S103** whether the portable device 50 receives this request signal **A** or not. When receiving, the portable device **50** transmits the ID signal **B** preferably including its own ID code in step **S104.**

The control unit **40** determines in step **S142** whether it receives the above-described ID signal **B** within a specified (predetermined or predeterminable) period of time or not. When it is YES, the verification of the ID signal **B** is conducted or not in step **S143.** Then, it is determined whether the verification of the ID signal **B** is confirmed in step **S144.** When it is confirmed, it is determined whether the portable device **50** is located inside the vehicle **1** or not in step **S145.** When it is located inside, the engine is started in step **S146.** Then, it is determined in step **S147** whether the vehicle start operation is conducted or not. When the vehicle start operation is conducted, the control sequence returns. When the vehicle start operation is not conducted, the control sequence proceeds to step **S148.** When the answer in the steps **S142, S144** or **S145** is NO, the indication or alarm is executed in step **S153,** and then the control sequence returns.

Then, it is determined in step **S148** whether the IG stop operation is conducted or not. When it is determined that the IG stop operation is conducted, the engine is stopped in step **S149** and the control sequence ends. When it is determined that the IG stop operation is not conducted, it is determined in step **150** whether the battery capacity exceeds the second (predetermined or predeterminable) capacity or not (the second capacity preferably has the greater value than the first capacity in the step **S29).** When the battery capacity does not exceed the second capacity, the control sequence returns to the step **S141.** When the battery capacity exceeds the second capacity, it is determined in step **S151** whether the brake boost exceeds the second (predetermined or predeterminable) boost or not (the second brake boost has the greater value than the first bake boost in the step **S30**). When the brake boost does not exceed the second boost, the control sequence returns to the step **S141.** When the brake boost exceeds the second boost, the idling stop is executed in step **S152,** and after that the control sequence returns to the step **S31** in FIG. **9****.**

As described above, according to the device and method of the second preferred embodiment, which is different from the first embodiment in FIGS. **8 - 10****,** the engine's start (step **S146**) according to the emergency start requirement (step **S29, S30**) is also executed with the confirmation of the ID verification with the portable device **50** (step **S144**). Thereby, the antitheft function of the SES system can be strengthened further compared with the first embodiment.

In the above-described embodiment, when it is determined that the operation for the vehicle start is conducted in step **S147** in FIG. **11****,** the control sequence may return to the step **S31** in FIG. **9** as shown by a broken line. With the verification of the passenger, the vehicle antitheft function may be further improved.

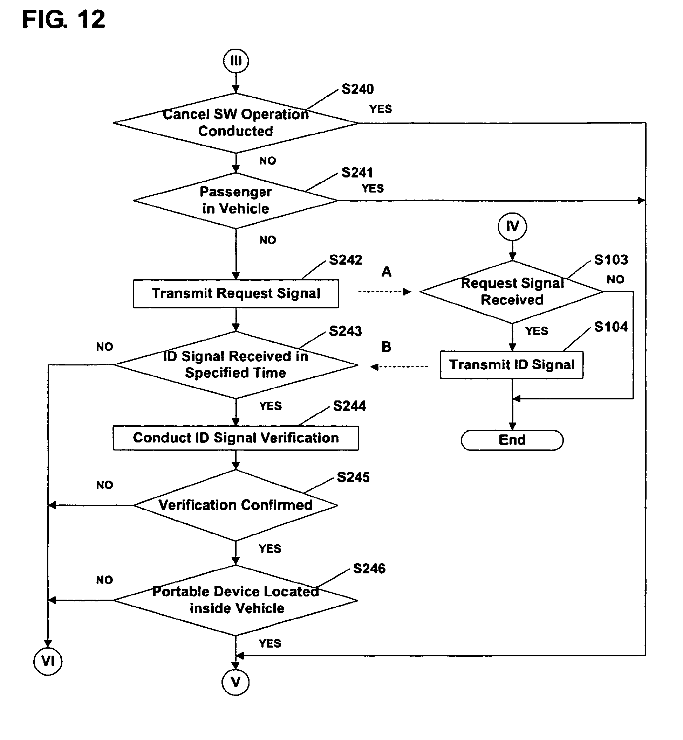

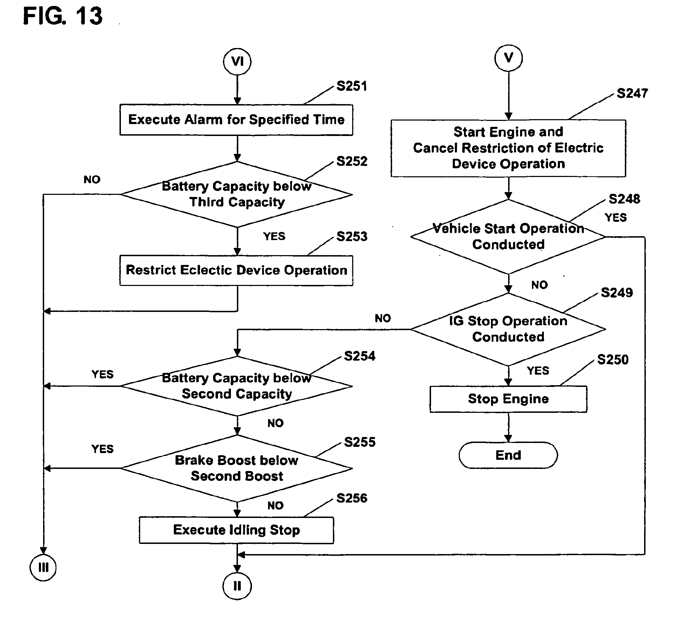

Next, a third preferred embodiment of the idling stop start control routine will be described referring to flowcharts in FIGS. **12** and **13****.**

When the battery capacity decreases below the first (predetermined or predeterminable) capacity in the step **S29** and/or the brake boost decreases below the first (predetermined or predeterminable) boost in the step **S30** in FIG. **9****,** the control sequence proceeds to step **S240** in FIG. **12**, where the unit **40** determines whether a cancel switch operation is conducted or not. When the cancel switch is not operated, it is determined in step **S241** whether the passenger is in the vehicle **1** or not. When the passenger is not, the control unit **40** transmits the request signal **A** in step **S242**. The portable device **50** determines in step **S103** whether it receives the above-described request signal **A** or not. When it receives the signal, the portable device **50** transmits the ID signal **B** including its own code in the step **S104.**

Herein, the cancel switch operation in the step **S240** is effective for a specified (predetermined or predeterminable) period of time, preferably until the IG stop operation is conduced. Also, the determination that the passenger is in the vehicle **1** in the step **S241** preferably is considered to be made when any door's opening is not detected by the door opening detecting sensor **26** after the start of the idling stop execution, when the motion sensor **18** detects something, when the sitting weight sensor **19** outputs its weight-detecting signal, and/or when any switch's operation of the electric-device unit **20** is operated or detected.

Next, the control unit **40** determines in step **S243** whether it receives the above-described ID signal **B** within a specified (predetermined or predeterminable) period of time or not. When it is YES, the verification of the ID signal **B** is conducted in step **S244.** Then, it is determined whether the verification of the ID signal **B** is confirmed or not in step **S245**. When it is confirmed, it is determined whether the portable device **50** is located inside the vehicle **1** or not in step **S246**. When it is located inside, the control sequence proceeds to step **S247** in FIG. **13****,** where the engine is started. Herein, when any operation of the electric device has been restricted in step **S253,** which will described below, this restriction is canceled in this step **S247.** Meanwhile, the answer in the steps **S243**, **S245** or **S246** is NO, the indication or alarm is executed in the vehicle **1** for a specified (predetermined or predeterminable) period of time in step **S251** in FIG. **13****,** and then it is determined in step **S252** whether the battery capacity decreases below a third (predetermined or predeterminable) capacity or not (the third capacity preferably has a smaller value than the first capacity in the step **S29**). When the battery capacity decrease below the third capacity, the operation of electric device is restricted in step **S253**, and then the control sequence returns to the step **S240**, where it is determined whether the cancel switch operation is conducted or not. Meanwhile, if the battery capacity does not decrease below the third capacity, the control sequence returns to the step **S240,** where it is determined whether the cancel switch operation is conducted or not, likewise.

Then, it is determined in step **S248** in FIG. **13** whether the vehicle start operation is conducted or not. When the vehicle start operation is not conducted, it is determined in step **S249** preferably whether the IG stop operation is conducted or not. When it is determined that the IG stop operation is conducted, the engine is stopped in step **S250** and the control sequence ends. When it is determined that the IG stop operation is not conducted, it is determined in step **254** whether the battery capacity becomes below the second capacity or not. When it does not become below that, it is determined in step **S255** whether the brake boost becomes below the second (predetermined or predeterminable) boost (level) or not (the second brake boost preferably has the greater value than the first bake boost in the step **S30**). When the brake boost does not become below the second boost, the idling stop is executed in step **S256**, and after that the control sequence returns to the step **S31** in FIG. **9****.** When the vehicle start operation is conducted in the step **S248**, the control sequence returns to the step **S31.** Also, when the answer is YES in the steps **S254, S255,** the control sequence returns to the step **S240** in FIG. **12****.**

As described above, according to the vehicle **1** equipped with both ISS system and SES system of the third embodiment, when the passenger's existence in the vehicle **1** is detected during the idling stop execution by the passenger detecting device, such as the motion sensor **18,** sitting-weight detecting sensor **19,** switch of the electric-device unit **20,** door opening detecting sensor **26** and/or the like (step **S241**), the engine's started is granted without the confirmation of the ID verification with the portable device **50** (step **S247**). Accordingly, even if there occurs any problems with the verification by the portable device **50,** the engine can be started surely as long as the passenger **X** is in the vehicle **1.**

Meanwhile, when the passenger's existence in the vehicle **1** is not detected by the passenger detecting device **18, 19, 20, 26...** (step **S241**), when the control unit **40** does not receive the ID signal **B** from the portable device **50** within the specified (predetermined or predeterminable) period of time after transmitting of the request signal **A** (step **S243**), when the verification of ID signal **B** verification can not be confirmed even if it receives the ID signal B (step **S245**), and/or when the portable device **50** is not located in the vehicle **1** (step **S246**), the indication or alarm is executed preferably by the warning lamp and/or buzzer **28** in the vehicle **1** for the specified (predetermined or predeterminable) period of time (step **S251**). Accordingly, the engine staring is restricted, so that the engine can be prevented from being started automatically when passenger's existence is not detected after the passenger **X** carrying the portable device **50** gets off the vehicle **1.** Thus, the antitheft function of the SES system can be improved.

Further, since the operation of the onboard electric device is restricted when the engine start is restricted (step **S253**), the battery discharge can be avoided properly in advance. Herein, the step **S252** can be omitted.

Also, when the passenger's existence in the vehicle **1** is not detected by the passenger detecting device **18, 19, 20, 26...** (step **S241**), the engine start is granted on the condition of the confirmation of ID verification with the portable device **50** (step **S247**). Namely, even if any malfunctions or detecting mistakes would happen to the passenger detecting device **18, 19, 20, 26...,** a situation where the engine can not be started with the vehicle start operation by the passenger **X** during, for example, a vehicle stop for waiting for the light changed, can be prevented from happening. Also, even if any malfunctions or detecting mistakes would happen to the passenger detecting device **18, 19, 20, 26...** and thereby the passenger's existence in the vehicle **1** is not detected, the engine start is granted as long as the ID verification with the portable device **50** is confirmed. Thereby, the battery discharge can be prevented, thereby securing the operation of the onboard electric devices, and particularly the brake boost can be prevented from decreasing inappropriately. Herein, since the ID verification has been confirmed, the grant of engine start would not cause the vehicle-theft problem.

Further, since there is provided the cancel switch **21** to cancel restrictions of the engine start and the onboard-electric-device operation by the control unit **40,** the engine can be operated (step **S247**) by the passenger **X** operating this cancel switch **21.** Thereby, even in a case, for example, where the passenger **X** goes out of the vehicle **1** and the onboard electric devices, such as audio device, some equipment connected to cigar-lighter outlet via a cable, are used for a long time, the operation of these devices can be attained properly with the function of the cancel switch **21** and the utility of the vehicle **1** can be improved.

Accordingly, a control unit **40** automatically stops an engine when a vehicle is stopped and automatically starts the engine in a case where operation for a vehicle start is conducted by a passenger or a specified emergency start is required. Herein, in the case where the operation for the vehicle start is conducted by the passenger, the engine is automatically started when ID verification with a portable device **50** is confirmed, and in the case where the specified emergency start is required, the engine is automatically started without the confirmation of the ID verification with the portable device **50.** Accordingly, a proper antitheft function of a smart engine starter (SES) system and a proper engine-start function of an idling stop start (ISS) system.

The present invention should not be limited to the above-described embodiments, but any other modifications and improvements may be applied within the scope of a sprit of the present invention as defined by the claims.

## Claims

1. A control system for a vehicle (1), comprising:
a smart engine starter control device (40), in which a start of an engine of the vehicle (1) is granted when ID verification with a portable device (50) operative to exchange particularly wireless signals is confirmed in a case where an operation for an engine start is conducted by a passenger (X); and
an idling stop start control device (40), in which the engine is automatically stopped when the vehicle (1) is stopped and automatically started in a case where an operation for a vehicle start is conducted by the passenger (X) or a specified emergency start is required,
wherein said idling stop start control device (40) is configured such that in the case where the operation for the vehicle start is conducted by the passenger (X), the engine is automatically started at least when the ID verification with the portable device (50) is confirmed, and in the case where the specified emergency start is required, the engine is automatically started without the confirmation of the ID verification with the portable device (50),
and wherein said idling stop start control device (40) is further configured such that after the engine is automatically started according to the requirement of the specified emergency start and in the case where the operation for the vehicle start is conducted by the passenger (X), the vehicle (1) is prohibited from starting when the ID verification with the portable device (50) is not confirmed.

2. The control system for a vehicle (1) according to claim 1, wherein said idling stop start control device (40) is configured such that after the engine is automatically started according to the requirement of the specified emergency start and when the ID verification with the portable device (50) is not confirmed, a specified alarm or display is conducted.

3. The control system for a vehicle (1) of one of the preceding claims, wherein there is further provided at least one passenger detecting device (18, 19, 20, 26) to detect an existence of the passenger (X) in the vehicle (1), and said idling stop start control device (40) is configured such that the engine start according to the requirement of the specified emergency start is restricted when the passenger's existence is not detected by the passenger detecting device (18, 19, 20, 26).

4. The control system for a vehicle (1) of one of the preceding claims, wherein said idling stop start control device (40) is configured such that an operation of an onboard electric device is restricted when the engine start is restricted.

5. The control system for a vehicle (1) of one of the preceding claims in combination with claim 4, wherein said idling stop start control device (40) is configured such that when the passenger's existence is not detected by the passenger detecting device (18, 19, 20, 26), the engine start is granted on a condition of the confirmation of the ID verification with the portable device (50).

6. The control system for a vehicle (1) of one of the preceding claims, wherein there is further provided a restriction cancel device (21) to cancel restrictions of the engine start and the onboard-electric-device operation, which is to be operated by the passenger (X).

7. A control method for a vehicle (1), comprising the following steps: an engine starter control step granting a start of an engine of the vehicle (1) when ID verification with a portable device (50) operative to exchange particularly wireless signals is confirmed in a case where an operation for an engine start is conducted by a passenger (X); and
an idling stop start control step automatically stopping the engine when the vehicle (1) is stopped and automatically starting the engine in a case where an operation for a vehicle start is conducted by the passenger (X) or a specified emergency start is required,
wherein in said idling stop start control step in the case where the operation for the vehicle start is conducted by the passenger (X), the engine is automatically started at least when the ID verification with the portable device (50) is confirmed, and in the case where the specified emergency start is required, the engine is automatically started without the confirmation of the ID verification with the portable device (50),
and wherein in said idling stop start control step after the engine is automatically started according to the requirement of the specified emergency start and in the case where the operation for the vehicle start is conducted by the passenger (X), the vehicle (1) is prohibited from starting when the ID verification with the portable device (50) is not confirmed.

8. Computer program product comprising computer-readable instructions, in particular stored on a computer-readable storage medium, which when loaded and executed on a suitable system perform a control method for a vehicle (1) according to claim 7.

## Patentansprüche

1. Steuer- bzw. Regelsystem für ein Fahrzeug (1), umfassend:
eine intelligente Motorstartsteuer- bzw. -regelvorrichtung (40), bei welcher ein Start eines Motors des Fahrzeugs (1) gewährt wird, wenn eine ID-Verifizierung mit einer tragbaren Vorrichtung (50), die wirksam bzw. betriebsfähig ist, um insbesondere drahtlose Signale auszutauschen, in einem Fall bestätigt wird, wo eine Bedienung bzw. Betätigung bzw. Vorgang für einen Motorstart von einem Fahrgast (X) durchgeführt wird; und
eine Leerlauf-Stop-Start-Steuer- bzw. -Regelvorrichtung (40), bei welcher der Motor automatisch gestoppt wird, wenn das Fahrzeug (1) gestoppt wird, und automatisch in einem Fall gestartet wird, wo eine Bedienung bzw. Betätigung bzw. Vorgang für einen Fahrzeugstart von dem Fahrgast (X) durchgeführt wird oder ein spezifizierter Notstart erforderlich ist,
wobei die Leerlauf-Stop-Start-Steuer- bzw. -Regelvorrichtung (40) so konfiguriert ist, dass in dem Fall, wo der Vorgang für den Fahrzeugstart von dem Fahrgast (X) durchgeführt wird, der Motor automatisch zumindest dann gestartet wird, wenn die ID-Verifizierung mit der tragbaren Vorrichtung (50) bestätigt wird, und in dem Fall, wo der spezifizierte Notstart erforderlich ist, der Motor automatisch ohne die Bestätigung der ID-Verifizierung mit der tragbaren Vorrichtung (50) gestartet wird,
und wobei die Leerlauf-Stop-Start-Steuer- bzw. -Regelvorrichtung (40) ferner so konfiguriert ist, dass nach dem automatischen Start des Motors gemäß dem Erfordernis des spezifizierten Notstarts und in dem Fall, wo der Vorgang für den Fahrzeugstart von dem Fahrgast (X) durchgeführt wird, es dem Motor (1) verboten ist zu starten, wenn die ID-Verifizierung mit der tragbaren Vorrichtung (50) nicht bestätigt wurde bzw. wird.

2. Steuer- bzw. Regelsystem für ein Fahrzeug (1) nach Anspruch 1, wobei die Leerlauf-Stop-Start-Steuer- bzw. -Regelvorrichtung (40) so konfiguriert ist, dass nach dem automatischen Start des Motors gemäß dem Erfordernis des spezifizierten Notstarts und wenn die ID-Verifizierung mit der tragbaren Vorrichtung (50) nicht bestätigt wurde bzw. wird, ein spezifizierter Alarm oder Anzeige bzw. Anzeigevorgang durchgeführt wird.

3. Steuer- bzw. Regelsystem für ein Fahrzeug (1) nach einem der vorhergehenden Ansprüche, wobei ferner zumindest eine Fahrgasterkennungsvorrichtung (18, 19, 20, 26) vorgesehen ist, um die Anwesenheit des Fahrgasts (X) in dem Fahrzeug (1) zu erkennen, und die Leerlauf-Stop-Start-Steuer- bzw. -Regelvorrichtung (40) so konfiguriert ist, dass der Motorstart gemäß dem Erfordernis des spezifizierten Notstarts beschränkt ist, wenn die Anwesenheit des Fahrgasts nicht von der Fahrgasterkennungsvorrichtung (18, 19, 20, 26) erkannt wird.

4. Steuer- bzw. Regelsystem für ein Fahrzeug (1) nach einem der vorhergehenden Ansprüche, wobei die Leerlauf-Stop-Start-Steuer- bzw. -Regelvorrichtung (40) so konfiguriert ist, dass eine Bedienung einer eingebauten elektrischen Vorrichtung beschränkt ist, wenn der Motorstart beschränkt ist.

5. Steuer- bzw. Regelsystem für ein Fahrzeug (1) nach einem der vorhergehenden Ansprüche in Kombination mit Anspruch 4, wobei die Leerlauf-Stop-Start-Steuer- bzw. -Regelvorrichtung (40) so konfiguriert ist, dass wenn die Anwesenheit des Fahrgasts nicht von der Fahrgasterkennungsvorrichtung (18, 19, 20, 26) erkannt wird, der Motorstart unter einer bzw. der Bedingung der Bestätigung der ID-Verifizierung mit der tragbaren Vorrichtung (50) gewährt wird.

6. Steuer- bzw. Regelsystem für ein Fahrzeug (1) nach einem der vorhergehenden Ansprüche, wobei ferner eine Beschränkungsaufhebungsvorrichtung (21) vorgesehen ist, um Beschränkungen des Motorstarts und der Bedienung der eingebauten elektrischen Vorrichtung aufzuheben, die von dem Fahrgast (X) zu bedienen ist.

7. Steuer- bzw. Regelverfahren für ein Fahrzeug (1), umfassend die folgenden Schritte:
einen Motorstartsteuer- bzw. -regelschritt, der einen Start eines Motors des Fahrzeugs (1) gewährt, wenn eine ID-Verifizierung mit einer tragbaren Vorrichtung (50), die wirksam bzw. betriebsfähig ist, um insbesondere drahtlose Signale auszutauschen, in einem Fall bestätigt wird, wo eine Bedienung bzw. Betätigung bzw. Vorgang für einen Motorstart von einem Fahrgast (X) durchgeführt wird; und
einen Leerlauf-Stop-Start-Steuer- bzw. -Regelschritt, der den Motor automatisch stoppt, wenn das Fahrzeug (1) gestoppt wird, und den Motor automatisch in einem Fall startet, wo eine Bedienung bzw. Betätigung bzw. Vorgang für einen Fahrzeugstart von dem Fahrgast (X) durchgeführt wird oder ein spezifizierter Notstart erforderlich ist,
wobei in dem Leerlauf-Stop-Start-Steuer- bzw. -Regelschritt in dem Fall, wo der Vorgang für den Fahrzeugstart von dem Fahrgast (X) durchgeführt wird, der Motor automatisch zumindest dann gestartet wird, wenn die ID-Verifizierung mit der tragbaren Vorrichtung (50) bestätigt wird, und in dem Fall, wo der spezifizierte Notstart erforderlich ist, der Motor automatisch ohne die Bestätigung der ID-Verifizierung mit der tragbaren Vorrichtung (50) gestartet wird,
und wobei in dem Leerlauf-Stop-Start-Steuer- bzw. -Regelschritt nach dem automatischen Start des Motors gemäß dem Erfordernis des spezifizierten Notstarts und in dem Fall, wo der Vorgang für den Fahrzeugstart von dem Fahrgast (X) durchgeführt wird, es dem Motor (1) verboten ist zu starten, wenn die ID-Verifizierung mit der tragbaren Vorrichtung (50) nicht bestätigt wurde bzw. wird.

8. Computerprogrammprodukt mit computerlesbaren Instruktionen, das insbesondere auf einem computerlesbaren Speichermedium gespeichert ist, das, wenn es auf einem geeigneten System geladen ist und ausgeführt wird, ein Steuer- bzw. Regelverfahren für ein Fahrzeug (1) nach Anspruch 7 durchführt.

## Revendications

1. Système de contrôle pour un véhicule (1), comprenant :
un dispositif intelligent de contrôle de démarreur de moteur (40), dans lequel un démarrage d'un moteur du véhicule (1) est autorisé quand une vérification d'ID avec un dispositif portable (50) servant à échanger des signaux en particulier sans fil est confirmée dans un cas où une opération pour un démarrage de moteur est effectuée par un passager (X) ; et
un dispositif de contrôle d'arrêt au ralenti et démarrage (40), dans lequel le moteur est arrêté automatiquement quand le véhicule (1) est arrêté et démarré automatiquement dans un cas où une opération pour un démarrage de véhicule est effectuée par le passager (X) ou un démarrage d'urgence spécifié est nécessaire,
dans lequel ledit dispositif de contrôle d'arrêt au ralenti et démarrage (40) est configuré de telle sorte que, dans le cas où l'opération pour le démarrage du véhicule est effectuée par le passager (X), le moteur est démarré automatiquement au moins quand la vérification d'ID avec le dispositif portable (50) est confirmée, et dans le cas où le démarrage d'urgence spécifié est nécessaire, le moteur est démarré automatiquement sans la confirmation de la vérification d'ID avec le dispositif portable (50),
et dans lequel ledit dispositif de contrôle d'arrêt au ralenti et démarrage (40) est en outre configuré de telle sorte qu'après que le moteur est démarré automatiquement selon l'exigence du démarrage d'urgence spécifié et dans le cas où l'opération pour le démarrage du véhicule est effectuée par le passager (X), le véhicule (1) est empêché de démarrer quand la vérification d'ID avec le dispositif portable (50) n'est pas confirmée.

2. Système de contrôle pour un véhicule (1) selon la revendication 1, dans lequel ledit dispositif de contrôle d'arrêt au ralenti et démarrage (40) est configuré de telle sorte qu'après que le moteur est démarré automatiquement selon l'exigence du démarrage d'urgence spécifié et quand la vérification d'ID avec le dispositif portable (50) n'est pas confirmée, une alarme ou un affichage spécifié est effectué.

3. Système de contrôle pour un véhicule (1) selon l'une des revendications précédentes, dans lequel est en outre prévu au moins un dispositif de détection de passager (18, 19, 20, 26) pour détecter l'existence du passager (X) dans le véhicule (1), et ledit dispositif de contrôle d'arrêt au ralenti et démarrage (40) est configuré de telle sorte que le démarrage du moteur selon l'exigence du démarrage d'urgence spécifié est restreint quand l'existence du passager n'est pas détectée par le dispositif de détection de passager (18, 19, 20, 26).

4. Système de contrôle pour un véhicule (1) selon l'une des revendications précédentes, dans lequel ledit dispositif de contrôle d'arrêt au ralenti et démarrage (40) est configuré de telle sorte qu'une opération d'un dispositif électrique embarqué est restreinte quand le démarrage du moteur est restreint.

5. Système de contrôle pour un véhicule (1) selon l'une des revendications précédentes en combinaison avec la revendication 4, dans lequel ledit dispositif de contrôle d'arrêt au ralenti et démarrage (40) est configuré de telle sorte que quand l'existence du passager n'est pas détectée par le dispositif de détection de passager (18, 19, 20, 26), le démarrage du moteur est autorisé sous réserve de la confirmation de la vérification d'ID avec le dispositif portable (50).

6. Système de contrôle pour un véhicule (1) selon l'une des revendications précédentes, dans lequel est en outre prévu un dispositif d'annulation de restriction (21) pour annuler des restrictions du démarrage du moteur et de l'opération du dispositif électrique embarqué, qui doit être commandé par le passager (X).

7. Procédé de contrôle pour un véhicule (1), comprenant les étapes suivantes :
une étape de contrôle de démarreur de moteur autorisant un démarrage d'un moteur du véhicule (1) quand la vérification d'ID avec un dispositif portable (50) servant à échanger des signaux en particulier sans fil est confirmée dans un cas où une opération pour un démarrage de moteur est effectuée par un passager (X) ; et
une étape de contrôle d'arrêt au ralenti et démarrage arrêtant automatiquement le moteur quand le véhicule (1) est arrêté et démarrant automatiquement le moteur dans un cas où une opération pour un démarrage de véhicule est effectuée par le passager (X) ou un démarrage d'urgence spécifié est nécessaire,
dans lequel, dans ladite étape de contrôle d'arrêt au ralenti et démarrage, dans le cas où l'opération pour le démarrage du véhicule est effectuée par le passager (X), le moteur est démarré automatiquement au moins quand la vérification d'ID avec le dispositif portable (50) est confirmée, et dans le cas où le démarrage d'urgence spécifié est nécessaire, le moteur est démarré automatiquement sans la confirmation de la vérification d'ID avec le dispositif portable (50),
et dans lequel dans ladite étape de contrôle d'arrêt au ralenti et démarrage après que le moteur est démarré automatiquement selon l'exigence du démarrage d'urgence spécifié et dans le cas où l'opération pour le démarrage du véhicule est effectuée par le passager (X), le véhicule (1) est empêché de démarrer quand la vérification d'ID avec le dispositif portable (50) n'est pas confirmée.

8. Produit de programme computer comprenant des instructions lisibles par ordinateur, en particulier stocké sur un support de stockage lisible par ordinateur, qui quand il est chargé et exécuté sur un système approprié exécute un procédé de contrôle pour un véhicule (1) selon la revendication 7.
